(19) Europäisches Patentamt / European Patent Office / Office européen des brevets

(11) **EP 2 790 315 B1**

(12) **FASCICULE DE BREVET EUROPEEN**

(45) Date de publication et mention
de la délivrance du brevet:
**15.03.2017 Bulletin 2017/11**

(51) Int Cl.:
*H02P 25/03* (2016.01)   *H02M 7/5387* (2007.01)
*H02P 21/00* (2016.01)

(21) Numéro de dépôt: **14164154.8**

(22) Date de dépôt: **10.04.2014**

(54) **Système d'entraînement rotatif, procédé de commande d'un onduleur et programme d'ordinateur associé**

Drehantriebssystem, Steuerverfahren eines Wechselrichters und entsprechendes Computerprogramm

Rotary drive system, method for controlling an inverter, and related computer program

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.04.2013 FR 1353229**

(43) Date de publication de la demande:
**15.10.2014 Bulletin 2014/42**

(73) Titulaires:
• **Valeo Systèmes de Contrôle Moteur
95892 Cergy Pontoise Cedex (FR)**
• **Arts
75013 Paris (FR)**

(72) Inventeurs:
• **Bruyère, Antoine
78700 Evequemont (FR)**

• **Kestelyn, Xavier
59930 La Chapelle d'Armentières (FR)**
• **Semail, Eric
59800 Lille (FR)**
• **Sandulescu, Paul
59260 Hellemmes-Lille (FR)**
• **Meinguet, Fabien
1310 La Hulpe (BE)**

(74) Mandataire: **Audic, Hervé
Cabinet Audic
37 rue d'Amsterdam
75008 Paris (FR)**

(56) Documents cités:
**WO-A1-00/27023    US-B1- 6 605 912**

**Description**

La présente invention concerne un système d'entraînement rotatif, un procédé de commande d'un onduleur et un programme d'ordinateur associé.

Il est connu d'utiliser un système d'entraînement rotatif du type comportant :

- une source de tension continue,
- un moteur électrique présentant un axe de rotation, et comportant des phases indépendantes présentant des directions autour de l'axe de rotation,
- un onduleur destiné à connecter chaque phase à la source de tension continue, et
- un dispositif de commande destiné à fournir une commande à l'onduleur.

Dans certains systèmes d'entraînement, le dispositif de commande est destiné à commander l'onduleur de manière à obtenir un courant homopolaire nul dans le moteur électrique, de manière à répondre à certains objectifs, tandis que dans d'autres systèmes d'entraînement, le dispositif de commande est destiné à commander l'onduleur de manière à obtenir un courant homopolaire non nul dans le moteur électrique, de manière à répondre à d'autres objectifs.

Il peut être souhaité de disposer d'un système d'entraînement pouvant répondre à plusieurs objectifs lors de son fonctionnement.

Le brevet américain publié sous le numéro US 6,605,912 B1 décrit un système d'entraînement selon le préambule de la revendication 1.

Afin de résoudre au moins en partie le problème précédent, il est proposé un système d'entraînement rotatif selon la revendication 1.

Grâce à l'invention, il est possible d'adapter le fonctionnement électrique du moteur électrique afin d'atteindre différents objectifs, et en particulier d'injecter un courant ou une tension homopolaire différents pour atteindre ces objectifs, au cours du fonctionnement du moteur électrique.

D'autres caractéristiques de l'invention sont énoncées dans les revendications 2 à 8.

Il est également proposé un procédé de commande d'un onduleur selon la revendication 9.

Il est également proposé un programme d'ordinateur selon la revendication 10.

Un exemple de réalisation de l'invention va à présent être décrit, en référence aux dessins annexés, parmi lesquels :

- la figure 1 est schéma d'un système d'entraînement rotatif selon l'invention,
- la figure 2 est diagramme illustrant plusieurs zones de fonctionnement, et
- la figure 3 est un schéma-blocs d'un procédé de commande d'un onduleur du système de la figure 1.

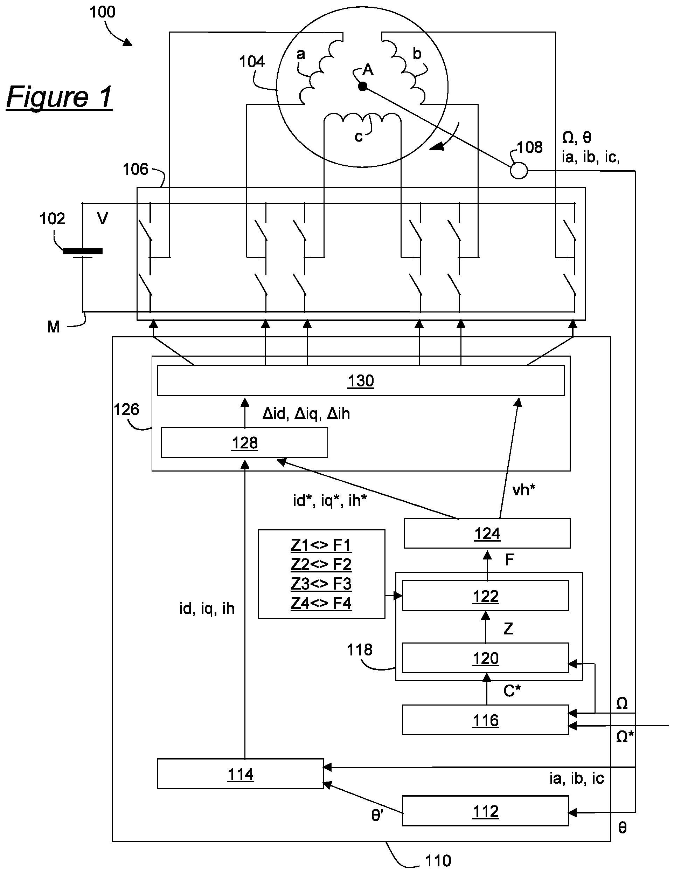

En référence à la figure 1, un système d'entraînement rotatif 100 selon l'invention va à présent être décrit.

Le système d'entraînement rotatif 100 comporte tout d'abord une source de tension continue 102 destinée à fournir une tension continue V par rapport à un potentiel électrique de référence M (masse électrique).

Le système d'entraînement rotatif 100 comporte en outre un moteur électrique 104. Comme cela est connu en soi, le moteur électrique 104 comporte un stator (non représenté) et un rotor (non représenté) destiné à tourner par rapport au stator autour d'un axe de rotation A, à une vitesse $\Omega$ et en fournissant un couple, appelé couple électromagnétique C. Dans l'exemple décrit, le moteur électrique 104 comporte en outre trois phases a, b, c présentant des directions réparties également autour de l'axe de rotation A, et p pôles. Chaque phase a, b, c présente deux bornes, et les phases a, b, c sont indépendantes. Les phases a, b, c sont destinées à être respectivement parcourues par des courants de phase ia, ib, ic et à présenter entre leurs bornes des tensions de phase va, vb, vc.

Le système d'entraînement rotatif 100 comporte en outre un onduleur 106 destiné à connecter chaque phase a, b, c du moteur électrique 104 à la source de tension continue 102. L'onduleur 106 comporte six bras, chacun associé à une borne respective des phases a, b, c. Chaque bras est destiné à connecter sa borne associée à la tension V ou bien à la masse M. Chaque bras comporte ainsi deux interrupteurs commandés en série, reliés en leur milieu à la borne associée. L'onduleur 106 est ainsi destiné à appliquer à chaque phase a, b, c : la tension +V, son opposé -V, ou bien la tension nulle lorsque les deux bornes de la phase considérée sont toutes les deux connectées au même point (V ou M).

Le système d'entraînement rotatif 100 comporte en outre un capteur 108 destiné à mesurer la vitesse $\Omega$ de rotation du rotor par rapport au stator, les courants de phase ia, ib, ic et l'angle, noté $\theta$, entre le rotor et le stator.

Le système d'entraînement rotatif 100 comporte en outre un dispositif 110 de commande de l'onduleur 106, destiné à fournir une commande à l'onduleur 106 pour le commander en fonction de la vitesse $\Omega$, des courants de phase ia, ib, ic, de l'angle $\theta$ et d'une consigne de vitesse $\Omega^*$ de rotation du rotor par rapport au stator. La consigne de vitesse $\Omega^*$ est par exemple reçue d'un régulateur de vitesse lorsque le système 100 est implémenté dans un véhicule automobile. La commande de l'onduleur 106 correspond généralement à des commandes à très haute fréquence d'ouverture/fermeture des interrupteurs. Le dispositif de commande 110 est par exemple réalisé sous la forme d'un calculateur. Dans ce cas, les moyens du dispositif de commande 110 détaillés ci-dessous sont par exemple réalisés sous la forme de programmes informatiques exécutés par le calculateur et/ou de circuits électroniques dédiés du calculateur.

Le dispositif de commande 110 comporte tout d'abord des moyens 112 de détermination d'un angle utile θ' à partir de l'angle mécanique θ. L'angle utile θ' est par exemple égal à cet angle mécanique θ, ou bien égal à l'angle électrique valant cet angle mécanique θ multiplié par le nombre de paires de pôles p du moteur électrique 104.

Le dispositif de commande 110 comporte en outre des moyens 114 d'application de la transformée de Park (également appelée transformée dq0) aux courants de phase ia, ib, ic pour déterminer le courants direct id, le courant de quadrature iq et le courant homopolaire ih. Les courants id, iq et ih sont donnés suivant la formule :

$$\begin{bmatrix} id \\ iq \\ ih \end{bmatrix} = \sqrt{\frac{2}{3}} \begin{bmatrix} \cos(\theta') & \cos\left(\theta' - \frac{2\pi}{3}\right) & \cos\left(\theta' + \frac{2\pi}{3}\right) \\ \sin(\theta') & -\sin\left(\theta' - \frac{2\pi}{3}\right) & -\sin\left(\theta' + \frac{2\pi}{3}\right) \\ \frac{\sqrt{2}}{2} & \frac{\sqrt{2}}{2} & \frac{\sqrt{2}}{2} \end{bmatrix} \begin{bmatrix} ia \\ ib \\ ic \end{bmatrix}$$

Ainsi, chaque courant de phase ia, ib, ic comporte une composante provenant des courant direct id et de quadrature iq, et une composante provenant du courant homopolaire ih.

Le dispositif de commande 110 comporte en outre des moyens 116 de détermination d'une consigne de couple électromagnétique C* du moteur électrique 104 à partir de la vitesse Ω et de la consigne de vitesse Ω*.

Le dispositif de commande 110 comporte en outre des moyens 118 de sélection de formule, destinés à sélectionner une formule F parmi des formules prédéterminées différentes, par exemple enregistrées dans une mémoire. Les formules prédéterminées sont au nombre de quatre dans l'exemple décrit et notées F1, F2, F3, F4. Chaque formule prédéterminée F1, F2, F3, F4 est destinée à calculer soit une consigne de tension homopolaire, soit une consigne de courant homopolaire. Ainsi, chaque formule définit la grandeur électrique homopolaire destinée à être asservie : soit le courant homopolaire ih, soit la tension homopolaire vh. De préférence, au moins une formule est destinée à calculer une consigne de courant homopolaire, et au moins une autre formule est destinée à calculer une consigne de tension homopolaire. Dans l'exemple décrit, les formules F1, F2 sont destinées à calculer une consigne de courant homopolaire, tandis que les formules F3, F4 sont destinées à calculer une consigne de tension homopolaire. Les formules F1, F2, F3, F4 seront décrites plus en détail plus loin.

Dans l'exemple décrit, la sélection est réalisée en fonction d'au moins un paramètre relatif au système d'entraînement rotatif 100. Plus précisément, dans l'exemple décrit, deux paramètres relatifs au moteur électrique 104 sont utilisés : la vitesse Ω et la consigne de couple C*. La vitesse Ω est une caractéristique de fonctionnement du moteur électrique 104, tandis que la consigne de couple C* est une caractéristique de commande du moteur électrique 104.

Dans l'exemple décrit, les moyens 118 de sélection de formule comportent des définitions de zones de l'espace défini par les paramètres relatifs au système d'entraînement 100. Ces définitions sont par exemple enregistrées dans une mémoire. Dans l'exemple décrit où deux paramètres relatifs au moteur électrique 104 sont utilisés, cet espace est bidimensionnel, c'est-à-dire plan. Dans l'exemple décrit, quatre zones Z1, Z2, Z3, Z4 sont définies et chaque zone Z1, Z2, Z3, Z4 est respectivement associée à l'une des formules F1, F2, F3, F4. En outre, dans l'exemple décrit, chaque zone Z1, Z2, Z3, Z4 est associée à une formule de calcul de consigne id* de courant direct et à une formule de calcul de consigne iq* de courant de quadrature.

Ainsi, dans l'exemple décrit, les moyens 118 de sélection de formule comportent tout d'abord des moyens 120 de détermination de zone, destinés à déterminer, parmi les zones prédéfinies, la zone Z correspondant aux paramètres relatifs au moteur électrique 104, c'est-à-dire dans l'exemple décrit, correspondant à la vitesse Ω et à la consigne de couple C*.

Les moyens 118 de sélection de formule comportent en outre des moyens 122 pour retrouver la formule F associée à la zone Z déterminée par les moyens 120 de détermination de zone, et à retrouver les formules de calcul de consigne de courant direct et de quadrature.

Le dispositif de commande 110 comporte en outre des moyens 124 de détermination de consigne, destinés à déterminer une consigne de courant direct id*, une consigne de courant de quadrature iq* et une consigne soit de courant homopolaire ih, soit de tension homopolaire vh, en appliquant les formules sélectionnées et en particulier la formule F sélectionnée pour la grandeur homopolaire.

Le dispositif de commande 110 comporte en outre des moyens 126 de détermination de commande, destinés à déterminer la commande de l'onduleur 106 à partir des consignes déterminées, et en particulier de la consigne de courant homopolaire, ou bien de la consigne de tension homopolaire, suivant le cas.

Dans l'exemple décrit, les moyens 126 de détermination de commande comportent des moyens 128 de détermination d'écarts, destinés à déterminer un écart Δid de courant direct, un écart Δiq de courant de quadrature et, lorsque la grandeur électrique homopolaire destinée à être asservie est le courant homopolaire ih, un écart Δih de courant homopolaire. Ces écarts sont déterminés à partir de la comparaison, respectivement, du courant direct id avec la consigne de courant direct id*, du courant de quadrature iq avec la consigne de courant de quadrature iq*, et du courant homopolaire ih avec la consigne de courant homopolaire ih*.

Les moyens 126 de détermination de commande comportent en outre des moyens 130 de calcul de commande, destinés à calculer la commande de l'onduleur 106 à partir des écarts Δid, Δiq et Δih lorsque la grandeur électrique homopolaire destinée à être asservie est le courant homopolaire ih, ou bien à partir des écarts Δid, Δiq précédents et de la consigne vh* de tension homopolaire lorsque la grandeur électrique homopolaire destinée à être asservie est la tension homopolaire vh.

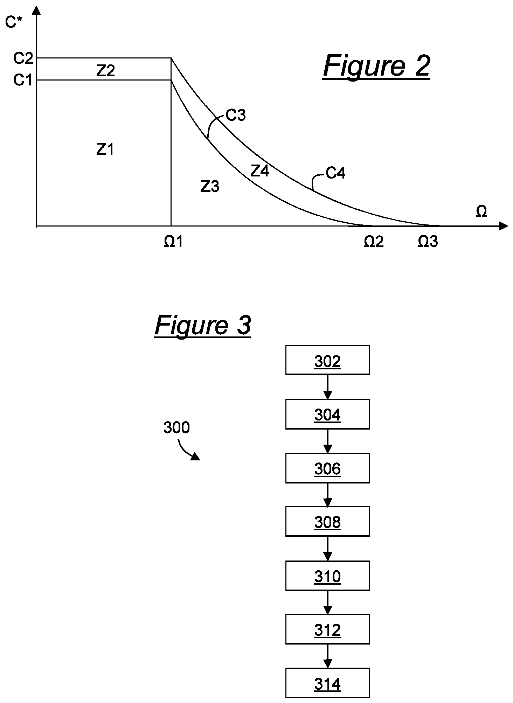

En référence à la figure 2, dans l'exemple décrit, quatre zones Z1, Z2, Z3, Z4 sont définies dans le plan des paramètres relatifs au moteur électrique 104, c'est-à-dire dans le plan C*-Ω.

La zone Z1 correspond à une consigne de couple C* inférieure à un seuil C1 et à une vitesse Ω inférieure à un seuil Ω1.

Le seuil Ω1 de vitesse correspond de préférence à des tensions de phase va, vb, vc toutes égales à la tension V de la source de tension continue 102.

La zone Z1 est associée, comme grandeur électrique homopolaire G destinée à être asservie, au courant homopolaire et à la formule F1 suivante de calcul de la consigne de courant homopolaire ih* :

$$F1 : ih^* = 0$$

Par ailleurs, la zone Z1 est en outre associée aux formules suivantes de calcul des consignes de courant direct id* et de courant de quadrature iq* :

$$id^* = 0$$

$$iq^* = k\ C^*,\ avec\ C^* \leq C1$$

Ainsi, puisqu'aucun courant homopolaire n'est admis dans la zone Z1, les pertes sont à un niveau minimum dans le moteur électrique 104. Cette stratégie est utilisable tant que la vitesse n'atteint pas le seuil de vitesse Ω1 correspondant à la tension V de la source de tension continue 102, ou bien tant que la consigne de couple est inférieure au seuil C2 correspondant aux limites de courant que peut fournir l'onduleur 106.

La zone Z2 correspond à une consigne de couple C* comprise entre le seuil C1 et un seuil C2, et à une vitesse Ω inférieure au seuil Ω1.

La zone Z2 est associée à la formule F2 suivante de calcul de la consigne ih* de courant homopolaire :

$$F2 : ih^* = k2\ \sin\ (\ 3\ p\ \Omega\ t + \varphi2\ )$$

Ainsi, la consigne de courant homopolaire ih* est sous la forme d'un harmonique troisième, c'est-à-dire d'une onde de fréquence trois fois plus élevée que le fondamental des courants de phase, ce fondamental étant de fréquence égale à la vitesse de rotation Ω multipliée par le nombre de paires de pôles p du moteur électrique 104.

Le coefficient k2 et le déphasage φ2 sont choisis de manière à diminuer la valeur de crête des courants de phase ia, ib, ic. En théorie, le cas optimal est obtenu lorsque le déphasage φ2 est nul.

Par ailleurs, la zone Z2 est associée aux formules suivantes de calcul des consignes de courant direct id* et de courant de quadrature iq* :

$$id^* = 0$$

$$iq^* = k\ C^*,\ avec\ C^* \leq C2$$

De manière générale, chaque courant de phase ia, ib, ic est limité par une limite en courant imax correspondant à la structure de l'onduleur 106. En l'absence d'autre composante et en particulier de composante homopolaire, la composante fondamentale, notée H1, est donc également limitée par cette limite imax.

Cependant, dans la zone Z2, chaque courant de phase ia, ib, ic fourni par l'onduleur 106 comporte une composante fondamentale H1 et une composante homopolaire H3. Dans la zone Z2, les consignes id*, iq* de courant direct et de quadrature entraînent la présence d'une composante fondamentale H1 supérieure à imax, tandis que la consigne de la composante homopolaire H3 est choisie pour diminuer la valeur de crête du courant, de sorte que la somme de la composante fondamentale H1 et de la composante homopolaire H3 reste sous la limite en courant imax. Les formules suivantes résument ce qui précède :

$$H1 + H3 \leq imax$$

$$Max(H1) > imax$$

Ainsi, le moteur électrique 104, qui répond à la composante fondamentale H1 de courant qu'il reçoit (et très peu à la composante homopolaire H3), peut atteindre des couples supérieurs dans la zone Z2 que dans la zone Z1 car la composante fondamentale est plus élevée, au détriment de pertes provenant de la présence de la composante homopolaire H3.

La zone Z3 correspond à une vitesse $\Omega$ comprise entre le seuil $\Omega1$ et un seuil $\Omega2$, et à une consigne de couple C* inférieure à un seuil C3 qui décroit lorsque la vitesse $\Omega$ augmente, depuis le seuil C1 lorsque la vitesse $\Omega$ est égale au seuil $\Omega1$ jusqu'à un seuil nul lorsque la vitesse $\Omega$ est égale au seuil $\Omega2$.

La zone Z3 est associée à la formule F3 suivante de calcul de la consigne vh* de tension homopolaire :

$$F3 : vh^* = k3 \sin ( 3\, p\, \Omega\, t + \varphi3 )$$

Ainsi, la consigne de tension homopolaire vh* est sous la forme d'un harmonique troisième, c'est-à-dire d'une onde de fréquence trois fois plus élevée que le fondamental des courants de phase, ce fondamental étant de fréquence égale à la vitesse de rotation $\Omega$ multipliée par le nombre de paires de pôles p du moteur électrique 104.

Par ailleurs, la zone Z3 est associée aux formules suivantes de calcul des consignes de courant direct id* et de courant de quadrature iq* :

$$id^* = f ( iq^*, ih^*, \Omega, V)$$

$$iq^* = k\, C^*$$

f étant une fonction judicieusement choisie, et avec $C^* \leq C3$.

De manière générale, chaque tension de phase va, vb, vc est limitée par la tension V de la source de tension continue 102. En l'absence d'autre composante et en particulier de composante homopolaire, la composante fondamentale, notée H1, est donc également limitée par cette tension V.

Cependant, dans la zone Z3, chaque tension de phase va, vb, vc fournie par l'onduleur 106 comporte une composante fondamentale H1 et une composante homopolaire H3. Dans la zone Z3, les consignes id*, iq* de courant direct et de quadrature entraînent la présence d'une composante fondamentale H1 supérieure à V, tandis que la consigne de la composante homopolaire H3 est choisie pour diminuer la valeur de crête de la tension, de sorte que la somme de la composante fondamentale H1 et de la composante homopolaire H3 reste sous la limite en tension V. Les formules suivantes résument ce qui précède :

$$H1 + H3 \leq V$$

$$Max(H1) > V$$

Ainsi, le moteur électrique 104, qui répond à la composante fondamentale H1 de tension qu'il reçoit (et très peu à la composante homopolaire H3), peut atteindre des vitesses supérieures dans la zone Z3 que dans la zone Z1 car la composante fondamentale H1 est plus élevée, au détriment de pertes provenant de la présence de la composante homopolaire H3.

La zone Z4 correspond à une vitesse $\Omega$ comprise entre le seuil $\Omega1$ et un seuil $\Omega3$, et une consigne de couple C* comprise entre la zone 3 et un seuil C4 qui décroit lorsque la vitesse $\Omega$ augmente, depuis le seuil C2 lorsque la vitesse $\Omega$ est égale au seuil $\Omega1$ jusqu'à un seuil nul lorsque la vitesse $\Omega$ est égale au seuil $\Omega3$.

La zone Z4 est associée à la formule F4 suivante de calcul de la consigne vh* de tension homopolaire :

$$F4 : vh* = k4 \sin ( 3 p \Omega t + \varphi4 )$$

Par ailleurs, la zone Z4 est associée aux formules suivantes de calcul des consignes de courant direct id* et de courant de quadrature iq* :

$$id* = g ( iq*, ih*, \Omega, V)$$

$$iq* = k C*$$

g étant une fonction judicieusement choisie, et avec $C* \leq C4$.

Dans la zone Z4, chaque tension de phase va, vb, vc fournie par l'onduleur 106 comporte une composante fondamentale H1 et une composante homopolaire H3. Il en résulte que chaque courant de phase ia, ib, ic fourni par l'onduleur 106 comporte une composante fondamentale H'1 et une composante homopolaire H'3. Dans la zone Z4, les consignes id*, iq* de courant direct et de quadrature entraînent la présence d'une composante fondamentale de tension H1 supérieure à V, et, en même temps, la présence d'une composante fondamentale de courant H'1 supérieure à imax. La consigne de la composante homopolaire H3 est choisie pour diminuer, d'une part, la valeur de crête de la tension de sorte que la somme de la composante fondamentale H1 et de la composante homopolaire H3 reste sous la limite en tension V, et, d'autre part, entraîner une composante homopolaire H'3 qui diminue la valeur de crête de courant de sorte que la somme de la composante fondamentale H'1 et de la composante homopolaire H'3 reste sous la limite en courant imax. Les formules suivantes résument ce qui précède :

$$H1 + H3 \leq V$$

$$H'1 + H'3 \leq imax$$

$$Max(H1) > V$$

$$Max(H'1) > imax$$

Ainsi, le moteur électrique 104, qui répond aux composantes fondamentales H1, H'1 qu'il reçoit (et très peu aux composantes homopolaires H3, H'3), peut atteindre des vitesses et des couples supérieurs dans la zone Z4 que dans la zone Z3 car les composantes fondamentales H1, H'1 y sont plus élevées, au détriment de pertes provenant de la présence des composantes homopolaires H3, H'3.

En variante, la zone Z4 est associée à la formule F4 suivante de calcul de la consigne ih* du courant homopolaire :

$$F4 : ih* = k'4 \sin ( 3 p \Omega t + \varphi'4 )$$

En référence à la figure 3, un procédé 300 de commande de l'onduleur 106 va à présent être décrit.

Au cours d'une étape 302, le capteur 108 mesure la vitesse $\Omega$, l'angle $\theta$ et les courants de phase ia, ib, ic, et fournit ces mesures au dispositif de commande 110.

Au cours d'une étape 304, les moyens 112 de détermination d'un angle utile déterminent l'angle utile θ' à partir de l'angle mécanique θ.

Au cours d'une étape 306, les moyens 114 d'application de la transformée de Park déterminent les courants direct id, de quadrature iq et homopolaire ih.

Au cours d'une étape 308, les moyens 116 de détermination de consigne déterminent la consigne de couple C* à partir de la vitesse Ω et de la consigne de vitesse Ω*.

Au cours d'une étape 310, les moyens 118 de sélection de formule sélectionnent une formule F parmi les formules prédéterminées F1, F2, F3, F4.

Au cours d'une étape 312, les moyens 124 de détermination de consigne déterminent une consigne de courant direct id*, une consigne de courant de quadrature iq* et une consigne soit de courant homopolaire, soit de tension homopolaire, en appliquant la formule F sélectionnée.

Au cours d'une étape 314, les moyens de détermination de commande 126 déterminent une commande de l'onduleur 106, en particulier à partir de la consigne homopolaire déterminée à l'étape 312, et appliquent cette commande à l'onduleur 106.

Comme expliqué précédemment, chaque courant de phase ia, ib, ic, ainsi que chaque tension de phase va, vb, vc, présente une composante provenant du courant homopolaire ih, respectivement de la tension homopolaire. Ainsi, en agissant sur le courant homopolaire, respectivement la tension homopolaire, au travers d'une consigne judicieusement choisie, il est possible de modifier la forme des courants de phase ia, ib, ic, respectivement des tensions de phase va, vb, vc, suivant les besoins.

L'invention n'est pas limitée à l'exemple de réalisation précédemment décrit, mais au contraire définie par les revendications annexées, dont la portée s'étend à toutes les modifications et configurations alternatives pouvant être conçues à partir des connaissances générales de l'homme du métier.

En particulier, plutôt que d'imposer un courant homopolaire nul dans la zone Z1, une tension homopolaire constante pourrait être imposée.

## Revendications

1. Système d'entraînement rotatif (100) comportant :

   - une source de tension continue (102),
   - un moteur électrique (104) présentant un axe de rotation (A), et comportant des phases (a, b, c) présentant des directions autour de l'axe de rotation (A),
   - un onduleur (106) destiné à connecter chaque phase (a, b, c) à la source de tension continue (102), et
   - un dispositif de commande (110) destiné à fournir une commande à l'onduleur (106),
   - des moyens (118) de sélection de formule, destinés à sélectionner une formule parmi des formules prédéterminées,
   - des moyens (124) de détermination de consigne, destinés à appliquer la formule sélectionnée pour déterminer un consigne suivant la formule sélectionnée, et
   - des moyens (126) de détermination de commande, destinés à déterminer la commande de l'onduleur (106) à partir de la consigne déterminée,

   **caractérisé en ce que** les phases (a, b, c) sont indépendantes et **en ce que** chaque formule prédéterminée est destinée à calculer soit une consigne de tension homopolaire, soit une consigne de courant homopolaire, les formules prédéterminées comportant au moins une formule destinée à calculer une consigne non nulle de tension homopolaire et au moins une formule destinée à calculer une consigne non nulle de courant homopolaire.

2. Système d'entraînement rotatif (100) selon la revendication 1, dans lequel les moyens (118) de sélection de formule sont destinés à réaliser la sélection en fonction d'au moins un paramètre relatif au système d'entraînement rotatif (100).

3. Système d'entraînement rotatif (100) selon la revendication 2, dans lequel le ou les paramètres relatifs au système d'entraînement rotatif (100) incluent une caractéristique de fonctionnement du moteur électrique (104), par exemple sa vitesse de rotation (Ω).

4. Système d'entraînement rotatif (100) selon l'une quelconque des revendications 1 à 3, dans lequel les moyens (118) de sélection de formule comportent :

- des définitions de zones de l'espace défini par le ou les paramètres relatifs au système d'entraînement rotatif (100), chaque zone étant associée à l'une des formules prédéterminées (F1, F2, F3, F4),
- des moyens (120) de détermination de zone, destinés à déterminer, parmi les zones prédéfinies, la zone (Z) correspondant au ou aux paramètres relatifs au système d'entraînement rotatif (100), et
- des moyens (122) pour retrouver la formule (F) associée à la zone (Z) déterminée par les moyens (120) de détermination de zone.

5. Système d'entraînement rotatif (100) selon la revendication 4, dans lequel les moyens (118) de sélection de formule comportent au moins une définition d'une zone (Z1, Z2), cette zone (Z1, Z2) étant associée à une formule (F1, F2) destinée à calculer une consigne de courant homopolaire.

6. Système d'entraînement rotatif (100) selon la revendication 4 ou 5, dans lequel les moyens (118) de sélection de formule comportent au moins une définition d'une zone (Z3, Z4), cette zone (Z3, Z4) étant associée à une formule (F3, F4) destinée à calculer une consigne de tension homopolaire.

7. Système d'entraînement rotatif (100) selon l'une quelconque des revendications 4 à 6, dans lequel les moyens (118) de sélection de formule comportent au moins une définition d'une zone (Z2, Z3, Z4), cette zone (Z2, Z3, Z4) étant associée à une formule (F2, F3, F4) destinée à calculer une consigne sous la forme d'un harmonique homopolaire, par exemple sous la forme du premier harmonique homopolaire.

8. Système d'entraînement rotatif (100) selon l'une quelconque des revendications 4 à 7, dans lequel les moyens (118) de sélection de formule comportent au moins une définition d'une zone (Z1), cette zone (Z1) étant associée à une formule (F1) destinée à fournir une consigne nulle.

9. Procédé de commande d'un onduleur destiné à connecter, à une source de tension continue (102), chaque phase (a, b, c) d'un moteur électrique (104) présentant un axe de rotation (A), et comportant des phases indépendantes (a, b, c) présentant des directions autour de l'axe de rotation (A), le procédé comportant :

- la sélection (310) d'une formule parmi des formules prédéterminées, chaque formule prédéterminée étant destinée à calculer soit une consigne de tension homopolaire, soit une consigne de courant homopolaire, les formules prédéterminées comportant au moins une formule destinée à calculer une consigne non nulle de tension homopolaire et au moins une formule destinée à calculer une consigne non nulle de courant homopolaire,
- l'application (312) de la formule sélectionnée pour déterminer, suivant la formule sélectionnée, soit une consigne de tension homopolaire, soit une consigne de courant homopolaire, et
- la détermination (314) d'une commande de l'onduleur (106) à partir de la consigne déterminée.

10. Programme d'ordinateur comportant des instructions qui, lorsqu'exécutées sur un ordinateur, provoquent la réalisation par l'ordinateur des étapes d'un procédé de la revendication 9.

**Patentansprüche**

1. Drehantriebssystem (100), umfassend:

- eine Gleichspannungsquelle (102),
- einen elektrischen Motor (104), der eine Drehachse (A) aufweist und Phasen (a, b, c) umfasst, die Richtungen um die Drehachse (A) aufweisen,
- einen Wechselrichter (106), der ausgelegt ist, um jede Phase (a, b, c) mit der Gleichspannungsquelle (102) zu verbinden, und
- eine Steuervorrichtung (110), die ausgelegt ist, um dem Wechselrichter (106) eine Steuerung bereitzustellen,
- Mittel (118) zur Auswahl einer Formel, die ausgelegt sind, um eine Formel aus den vorbestimmten Formeln auszuwählen,
- Mittel (124) zur Bestimmung eines Einstellwerts, die ausgelegt sind, um die ausgewählte Formel anzuwenden, um einen Einstellwert gemäß der ausgewählten Formel zu bestimmen, und
- Mittel (126) zur Bestimmung einer Steuerung, die ausgelegt sind, um die Steuerung des Wechselrichters (106) ausgehend vom bestimmten Einstellwert zu bestimmen,

**dadurch gekennzeichnet, dass** die Phasen (a, b, c) unabhängig sind und dadurch, dass jede vorbestimmte Formel ausgelegt ist, um entweder einen gleichpoligen Spannungseinstellwert oder einen gleichpoligen Stromeinstellwert zu berechnen, wobei die vorbestimmten Formeln mindestens eine Formel umfassen, die ausgelegt ist, um einen Einstellwert von nicht gleich null der gleichpoligen Spannung zu berechnen, und mindestens eine Formel, die ausgelegt ist, um einen Einstellwert von nicht gleich null des gleichpoligen Stroms zu berechnen.

2. Drehantriebssystem (100) nach Anspruch 1, wobei die Mittel (118) zur Auswahl einer Formel ausgelegt sind, um die Auswahl je nach mindestens einem Parameter mit Bezug auf das Drehantriebssystem (100) durchzuführen.

3. Drehantriebssystem (100) nach Anspruch 2, wobei der oder die Parameter mit Bezug auf das Drehantriebssystem (100) eine Funktionseigenschaft des elektrischen Motors (104) umfassen, z. B. seine Drehgeschwindigkeit ($\Omega$).

4. Drehantriebssystem (100) nach einem der Ansprüche 1 bis 3, wobei die Mittel (118) zur Auswahl einer Formel Folgendes umfassen:

   - Definition von Bereichen des Raums, definiert von den Parametern mit Bezug auf das Drehantriebssystem (100), wobei jeder Bereich mit einer der vorbestimmten Formeln (F1, F2, F3, F4) assoziiert ist,
   - Mittel (120) zur Bestimmung eines Bereichs, die ausgelegt sind um, unter den vorbestimmten Bereichen, den Bereich (Z) zu bestimmen, der dem oder den Parametern mit Bezug auf das Drehantriebssystem (100) entspricht, und
   - Mittel (122) zum Abrufen der Formel (F), die mit dem Bereich (Z) assoziiert ist, der von den Mitteln (120) zur Bestimmung des Bereichs assoziiert ist.

5. Drehantriebssystem (100) nach Anspruch 4, wobei die Mittel (118) zur Auswahl einer Formel mindestens eine Definition eines Bereichs (Z1, Z2) umfassen, wobei dieser Bereich (Z1, Z2) mit einer Formel (F1, F2) assoziiert ist, die ausgelegt ist, um einen gleichpoligen Einstellwertstrom zu berechnen.

6. Drehantriebssystem (100) nach Anspruch 4 oder 5, wobei die Mittel (118) zur Auswahl einer Formel mindestens eine Definition eines Bereichs (Z3, Z4) umfassen, wobei dieser Bereich (Z3, Z4) mit einer Formel (F3, F4) assoziiert ist, die ausgelegt ist, um eine gleichpolige Einstellwertspannung zu berechnen.

7. Drehantriebssystem (100) nach einem der Ansprüche 4 bis 6, wobei die Mittel (118) zur Auswahl einer Formel mindestens eine Definition eines Bereichs (Z2, Z3, Z4) umfassen, wobei dieser Bereich (Z2, Z3, Z4) mit einer Formel (F2, F3, F4) assoziiert ist, die ausgelegt ist, um einen Einstellwert in Form einer gleichpoligen Oberschwingung zu berechnen, z. B. in Form einer ersten gleichpoligen Oberschwingung.

8. Drehantriebssystem (100) nach einem der Ansprüche 4 bis 7, wobei die Mittel (118) zur Auswahl einer Formel mindestens eine Definition eines Bereichs (Z1) umfassen, wobei dieser Bereich (Z1) mit einer Formel (F1) assoziiert ist, die ausgelegt ist, um einen Einstellwert von null zu liefern.

9. Verfahren zur Steuerung eines Wechselrichters, das ausgelegt ist, um mit einer Gleichspannungsquelle (102) jede Phase (a, b, c) eines elektrischen Motors (104), der eine Drehachse (A) aufweist, zu verbinden, und umfassend unabhängige Phasen (a, b, c), die Richtungen um die Drehachse (A) aufweisen, wobei das Verfahren Folgendes umfasst:

   - die Auswahl (310) einer Formel aus vorbestimmten Formeln, wobei jede vorbestimmte Formel ausgelegt ist, um entweder einen gleichpoligen Spannungseinstellwert oder einen gleichpoligen Stromeinstellwert zu berechnen, wobei die vorbestimmte Formeln mindestens eine Formel umfassen, die ausgelegt ist, um einen Einstellwert von nicht gleich null der gleichpoligen Spannung zu berechnen und mindestens eine Formel, die ausgelegt ist, um einen Einstellwert von nicht gleich null des gleichpoligen Stroms zu berechnen,
   - die Anwendung (312) der ausgewählten Formel, um, gemäß der ausgewählten Formel, entweder einen gleichpoligen Spannungseinstellwert oder einen gleichpoligen Stromeinstellwert zu berechnen, und
   - die Bestimmung (314) einer Steuerung des Wechselrichters (106) ausgehend vom bestimmten Einstellwert.

10. Computerprogramm, umfassend Anweisungen, die, wenn sie auf einem Computer ausgeführt werden, die Durchführung durch den Computer der Schritte eines Verfahren nach Anspruch 9 hervorrufen.

**Claims**

1. Rotary drive system (100) comprising:

   - a DC voltage source (102),
   - an electric motor (104) having an axis of rotation (A), and comprising phases (a, b, c) having directions about the axis of rotation (A),
   - an inverter (106) for connecting each phase (a, b, c) to the DC voltage source (102), and
   - a control device (110) for supplying a command to the inverter (106),
   - means (118) for selecting a formula, intended to select a formula from predefined formulas,
   - means (124) for determining a set-point, intended to apply the selected formula to determine a set-point according to the formula selected, and
   - means (126) for determining a command, intended to determine the command for the inverter (106) based on the set-point determined,

   **characterised in that** the phases (a, b, c) are independent and **in that** each predetermined formula is intended to calculate either a homopolar voltage set-point or a homopolar current set-point, the predetermined formulae comprising at least one formula intended to calculate a non-zero homopolar voltage set-point and at least one formula intended to calculate a non-zero homopolar current set-point.

2. Rotary drive system (100) according to claim 1, wherein the means (118) for selecting a formula are intended to make the selection based on at least one parameter relating to the rotary drive system (100).

3. Rotary drive system (100) according to claim 2, wherein the parameter or parameters relating to the rotary drive system (100) include an operating characteristic of the electric motor (104), for example the rotational speed ($\Omega$) thereof.

4. Rotary drive system (100) according to any of claims 1 to 3, wherein the means (118) for selecting a formula comprise:

   - definitions of zones of the space defined by the parameter or parameters relating to the rotary drive system (100), each zone being associated with one of the predefined formulas (F1, F2, F3, F4),
   - means (120) for determining a zone, intended to determine, from among the predefined zones, the zone (Z) corresponding to the parameter or parameters relating to the rotary drive system (100), and
   - means (122) for retrieving the formula (F) associated with the zone (Z) determined by the means (120) for determining a zone.

5. Rotary drive system (100) according to claim 4, wherein the means (118) for selecting a formula comprise at least one definition of a zone (Z1, Z2), this zone (Z1, Z2) being associated with a formula (F1, F2) for calculating a homopolar current set-point.

6. Rotary drive system (100) according to claim 4 or 5, wherein the means (118) for selecting a formula comprise at least one definition of a zone (Z3, Z4), this zone (Z3, Z4) being associated with a formula (F3, F4) for calculating a homopolar voltage set-point.

7. Rotary drive system (100) according to any of claims 4 to 6, wherein the means (118) for selecting a formula comprise at least one definition of a zone (Z2, Z3, Z4), this zone (Z2, Z3, Z4) being associated with a formula (F2, F3, F4) for calculating a set-point in the form of a homopolar harmonic, for example in the form of the first homopolar harmonic.

8. Rotary drive system (100) according to any or claims 4 to 7, wherein the means (118) for selecting a formula comprise at least one definition of a zone (Z1), this zone (Z1) being associated with a formula (F1) for supplying a zero set-point.

9. Method for controlling an inverter for connecting, to a DC voltage source (102), each phase (a, b, c) of an electric motor (104) having an axis of rotation (A), and comprising independent phases (a, b, c) having directions about the axis of rotation (A), the method comprising:

   - selecting (310) a formula from predetermined formulas, each predetermined formula being intended to calculate either a homopolar voltage set-point, or a homopolar current set-point, the predetermined formulae comprising at least one formula intended to calculate a non-zero homopolar voltage set-point and at least one formula intended to calculate a non-zero homopolar current set-point,

- applying (312) the selected formula to determine, according to the formula selected, either a homopolar voltage set-point or a homopolar current set-point, and

- determining (314) a command for the inverter (106) based on the set-point determined.

10. Computer program comprising instructions which, when run on a computer, cause the computer to perform the steps of a method according to claim 9.

Figure 1

*Figure 2*

*Figure 3*

300

**EP 2 790 315 B1**

## RÉFÉRENCES CITÉES DANS LA DESCRIPTION

**Documents brevets cités dans la description**

- US 6605912 B1